# EUROPÄISCHE PATENTSCHRIFT

(11) **EP 1 688 629 B1**
(45) Veröffentlichungstag und Bekanntmachung des Hinweises auf die Patenterteilung: **24.06.2009**
(21) Anmeldenummer: 06101273.8
(22) Anmeldetag: 03.02.2006
(51) Int. Cl.: F16B 43/00

(54) **Verbindungselement mit Schraube und Mutter**
Fastening device with screw and nut
Dispositif de fixation avec vis et écrou

(30) Priorität: 03.02.2005 DE 202005005069 U
(43) Veröffentlichungstag der Anmeldung: 09.08.2006
(73) Patentinhaber: NEDSCHROEF PLETTENBERG GmbH, 58840 Plettenberg (DE)
(72) Erfinder: Hirschfeld, Henning, 58840, Plettenberg (DE); Kirschniok, Joachim, 44369, Dortmund (DE); Kob, Peter-Wilm, 58849, Herscheid (DE)
(74) Vertreter: Dörner, Kötter & Kollegen

(56) Entgegenhaltungen:
- DE-A1- 3 131 107
- DE-U1-3202005 002 89
- US-A- 5 398 411
- US-A1- 2002 164 226
- PATENT ABSTRACTS OF JAPAN Bd. 1999, Nr. 14, 22. Dezember 1999 (1999-12-22) & JP 11 264407 A (SANNOHASHI:KK; NISSAN MOTOR CO LTD), 28. September 1999 (1999-09-28)

## Beschreibung

### I. Anwendungsgebiet

Die Erfindung betrifft ein Verbindungselement mit Schraube und Mutter.

### II. Technischer Hintergrund

Es ist ein Verbindungselement bestehend aus Schraube und Mutter bekannt, welches durch eine Zusatzausstattung eine Zusatzfunktion, über das rein axiale Verpressen zweier Teile gegeneinander hinaus, erfüllt:
Zwischen dem Schaft und dem Kopf der Schraube, und zwar drehfest hiermit verbunden, ist eine Exzenterscheibe angeordnet, die somit quasi Teil des Schraubenkopfes ist. Die Exzenterscheibe hat eine kreisrunde Außenkontur, sitzt jedoch exzentrisch zur Schraubenachse, wobei der eigentliche, in der Regel sechseckige, Schraubenkopf innerhalb des Umfanges der Exzenterscheibe liegt.

Durch Einstecken der Schraube in eine Bohrung eines ersten Bauteiles, bis diese Exzenterscheibe plan auf der Außenfläche des ersten Bauteiles anliegt, kann ein zweites, am ersten Bauteil ebenfalls plan anliegendes z. B. drittes Bauteil neben der Schraube nur soweit an die Verschraubung in Querrichtung angenähert werden, wie es die Exzenterscheibe zulässt.

Dieses Maß der Annäherung jedoch kann durch Verdrehung der Schraube und damit Veränderung der Drehlage der Exzenterscheibe verändert und genau eingestellt werden, wodurch die Relativlage des ersten und dritten Bauteiles zueinander justiert werden kann.

Die gleiche Exzentereinstellung ist nochmals am mutternseitigen Ende des Verbindungselementes vorhanden, indem dort ebenfalls eine Exzenterscheibe in Form einer Unterlegscheibe zur Mutter vorhanden ist.

Da sich auch diese zweite Exzenterscheibe mit dem Schaft der Schraube mitdrehen soll, um die genannte Funktion auch dort zu erfüllen, weist der Schaft der Schraube eine axial verlaufende Nut auf, in welche eine Nase, die im Innenumfang der Unterlegscheibe ausgebildet ist, formschlüssig eingreift, sobald diese exzentrische Unterlegscheibe vom freien Ende her auf den Schraubenschaft aufgesteckt wird. Wenn die endseitige Mutter aufgeschraubt wird, kann die Exzenterscheibe axial zum Schraubenschaft verschoben werden, behält jedoch seine Drehlage zum Schaft und damit analog zur anderen Exzenterscheibe bei.

Dementsprechend umfasst dieses Verbindungselement drei separat zu handhabende Teile, nämlich
- Schraube mit einstückig daran ausgeformter erster Exzenterscheibe,
- exzentrische Unterlegscheibe als zweite Exzenterscheibe
- Mutter, in der Regel eine selbstsichernde Mutter.

Da bei der Montage diese drei Teile nicht nur zusammengefügt, sondern während des Festziehens auch die gewünschte Drehlage der Exzenterscheiben genau eingestellt werden muss, ist die Handhabung für den Bediener nicht einfach, und vor allem ist die Montage des Verbindungselements mit diesen vielen Teilen nicht automatisierbar mittels eines Schraubautomaten etc.

Weiterhin zeigt US-A-5398411 ebenfalls ein solches dreiteiliges Verbindungselement, jedoch mit einem anderen Anwendungszweck, nämlich die Feinpositionierung des Schraubenschaftes zwischen zwei Maximalpositionen.

Weiterhin zeigt JP-A-11264407 eine hinsichtlich des Schraubenschaftes und der Mutter analoge Vorrichtung, bei der bereits die exzentrische Unterlegscheibe und die daran anschließende Mutter unverlierbar, aber drehbar relativ zu einander befestigt sind.

Allerdings dient diese dortige Vorrichtung einem anderen Zweck, was daraus ersichtlich ist, dass die exzentrische runde Beilagscheibe auf Seiten des Schraubenkopfes gerade nicht eine einstellbare Winkelstellung zur Schraubenachse einnehmen soll, sondern in einer ganz bestimmten Winkellage durch eine zusätzliche Sicherungsschraube fixiert wird. Dementsprechend ist dort auch diese schraubenseitige Beilagscheibe nicht drehfest mit dem Schraubenkopf verbunden.

Dass auch die Einstellung eines Abstandes - selbst auf Seiten der Mutter - nicht der Zweck dieser Vorrichtung ist, ist daraus ersichtlich, dass die Außenkontur bei der Beilagscheibe auf Seiten der Mutter eine kreissegmentförmige, runde, jedoch zur Mutter zentrische Außenkontur ist und somit durch Verschwenken der Beilagscheibe keine Abstandsveränderung herbeigeführt werden könnte.

### III. Darstellung der Erfindung

### a) Technische Aufgabe

Es ist daher die Aufgabe gemäß der Erfindung, ein Verbindungselement mit der gattungsgemäßen Funktion zu schaffen, welches einfacher zu handhaben und zu montieren ist und dennoch einfach und kostengünstig herstellbar ist, ohne funktionale Nachteile aufzuweisen.

### b) Lösung der Aufgabe

Diese Aufgabe wird durch die Merkmale des Anspruchs 1 gelöst. Vorteilhafte Ausführungsformen ergeben sich aus den Unteransprüchen.

Durch die unrunde Innenkontur der Unterlegscheibe und entsprechende, formschlüssig zusammenwirkende, Gestaltung des Querschnittes des Schraubenschaftes, vorzugsweise im Längenbereich des Gewindes, ist die Unterlegscheibe einerseits unverlierbar und damit einheitlich handhabbar mit der Mutter verbunden, bleibt jedoch andererseits in ihrer Drehlage aufgrund des Formschlusses mit dem Schraubenschaft immer in Übereinstimmung mit der Drehlage der Schraube.

Beim Festziehen der Mutter wird also wie gewünscht die Unterlegscheibe zunehmend zwischen Mutter und dem zu verschraubenden Bauteil verpresst, dreht jedoch zuverlässig nicht mit der Mutter mit, sondern behält immer die gleiche Drehlage zum Schraubenschaft und damit zu dem zu fixierenden Bauteil bei. Nur wenn von der Schraubenkopfseite her durch Einwirkung auf den Schraubenkopf der Schraubenschaft gedreht wird, wird im gleichen Maße mit dem Schaft auch die Unterlegscheibe mitgedreht.

Die Unterlegscheibe besitzt eine Außenkontur, die rund ist, aber exzentrisch zur Schraubachse der Mitter angeordnet ist, sodaß die Außenkontur der Unterlegscheibe als Einstellmittel gegenüber einem dritten Bauteil etc. benutzt werden kann.

In diesem Fall kann die Verschraubung zusätzlich auf der Seite des Schraubenkopfes eine Kopfscheibe aufweisen, deren Außenkontur der der Unterlegscheibe auf der gegenüberliegenden Seite der Verschraubung entspricht, jedoch mindestens drehfest, insbesondere auch in Längsrichtung fest, mit der Schraube, insbesondere deren Schaft, verbunden ist.

Dies kann beispielsweise erreicht werden durch eine Kopfscheibe, die einstückig zusammen mit Schraubenschaft und/oder Schraubenkopf hergestellt oder mit diesem drehfest verbunden, insbesondere verschweißt ist.

Eine kostengünstigere Lösung könnte darin bestehen, zwei gleichgestaltete Scheiben als Unterlegscheibe für die Mutter einerseits und Kopfscheibe andererseits auszubilden, und in gleicher Weise durch unrunde Ausbildung der Innenkontur dieser Scheiben und entsprechender Gestaltung der Außenkontur des Schraubenschaftes diese drehfest zusammenwirken zu lassen.

Die unrunde Außenkontur des Schraubenschaftes wird auf einfache Art und Weise dadurch erzielt, dass im Schraubenschaft in dessen Längsrichtung verlaufend an einer oder mehreren Stellen des Umfanges eine Nut eingearbeitet ist, und die Innenkontur der Scheibe, insbesondere der Unterlegscheibe, einen entsprechenden in den inneren Freiraum hinein vorstehenden Fortsatz aufweist.

Das Spiel in Umfangsrichtung zwischen den Flanken des Fortsatzes und den Flanken der Nut, aber auch das Spiel zwischen Innendurchmesser der Innenkontur der Scheibe und dem Außendurchmesser des Schraubenschaftes sollte dabei nicht mehr als 0,6 mm, insbesondere 0,4 mm, insbesondere 0,3 mm, betragen.

Um das Spiel in Umfangsrichtung möglichst gering zu halten und damit bei Drehung des Schraubenschaftes die Unterlegscheibe und/oder die Kopfscheibe möglichst sofort in Umfangsrichtung mitzuführen, sollten die Flanken des Fortsatzes im Idealfall parallel zueinander verlaufen, wenigstens jedoch einen möglichst geringen Winkel zwischen sich bilden, von höchstens 50°, insbesondere höchstens 30°, insbesondere höchstens 20°.

Aus Gründen der Rissverhinderung gehen die Flanken dabei möglichst stark gerundet in den Rest der Innenkontur über. Das freie Ende des Fortsatzes ist vorzugsweise gerundet ausgebildet.

Der Fortsatz hat damit insgesamt eine entweder V-förmige oder rechteckige Kontur mit gerundeten Ecken. Der Rest der Innenkontur ist - abgesehen von dem Fortsatz - entweder kreisrund gestaltet oder hufeisenförmig mit seinen freien Enden beidseits des Fortsatzes.

Durch Anordnung von zwei bezüglich der Schraubachse einander gegenüberliegenden Fortsätzen hängt das Spiel in Drehrichtung zwischen Scheibe und Schraubenschaft nur noch vom Spiel der Fortsätze in den Nuten, nicht mehr jedoch vom übrigen Spiel zwischen Außendurchmesser des Schraubenschaftes und übriger Innenkontur der Scheibe ab. Dieses Spiel kann jedoch leichter minimiert werden, beispielsweise durch konischen, kleiner werdenden, Verlauf der Nut im Schraubenschaft vom freien Ende zum Schraubenkopf hin.

Die unverlierbare Drehbarkeit der Mutter, die in der Regel einen Kopfteil zum Ansetzen eines Werkzeuges, z. B. einen Außensechskant, und andererseits einen daran anschließenden Flanschteil zur Anlage an dem zu fixierenden Bauteil umfasst, wird erreicht, indem ein ringförmig oder wenigstens teilweise kreisringförmig umlaufender Vorsprung formschlüssig in einer entsprechenden Hohlkehle anliegt, so dass ein axiales Herausbewegen des umlaufenden Vorsprunges aus der umlaufenden Hohlkehle verhindert ist.

Eine besonders einfache und kostengünstige Lösung ergibt sich dadurch, dass Flanschmuttern mit einem nach außen unten schräg abfallenden und dadurch einen Vorsprung bildenden Außenumfang am Flanschteil drehbar aber axial nicht herausnehmbar und damit unverlierbar in einer topfförmigen Zwischenscheibe aufgenommen sind, deren Rand nach oben innen gekrümmt ist und dadurch eine Hohlkehle bildet, in der der vorstehende, insbesondere schräg abfallende äußere Rand des Flanschteiles der Mutter formschlüssig drehbar gehalten ist. Der Boden einer solchen topfförmigen Zwischenscheibe weist erfindungsgemäß eine Durchgangsöffnung auf, die mindestens so groß ist wie das Innengewinde der entsprechenden Mutter, und mit diesem fluchtend.

Durch drehfeste Anordnung der Zwischenscheibe auf einer Seite der Unterlegscheibe, fluchtend mit deren Innenkontur, wird eine einzige, einheitlich zu handhabende Baugruppe geschaffen, bei der dennoch die Mutter gegenüber der Unterlegscheibe drehbar ist.

Die topfförmige Zwischenscheibe, die insbesondere aus einem Blechmaterial bestehen kann, ist erfindungsgemäß beidseits der Mittelachse auch jeweils im Querschnitt Z-förmig ausgebildet sein, wodurch die zweite entstehende, nach außen weisende Hohlkehle zum formschlüssig radialen Aufnehmen eines Teils des Umfanges der Innenkontur der Unterlegscheibe und deren Verschweißung, Verklemmung oder anderen drehfesten Verbindung zum Zwecke der Drehfestigkeit dient.

### c) Ausführungsbeispiele

Ausführungsformen sind im folgenden beispielhaft näher beschrieben. Es zeigen:
- Fig. 1:: eine gattungsgemäße Verschraubung gemäß dem Stand der Technik,
- Fig. 2:: Lösungen mit Zwischenscheibe,
- Fig. 3:: eine Lösung ohne Zwischenscheibe, und
- Fig. 4:: eine Lösung mit Zwischenklammer nach der Erfindung.

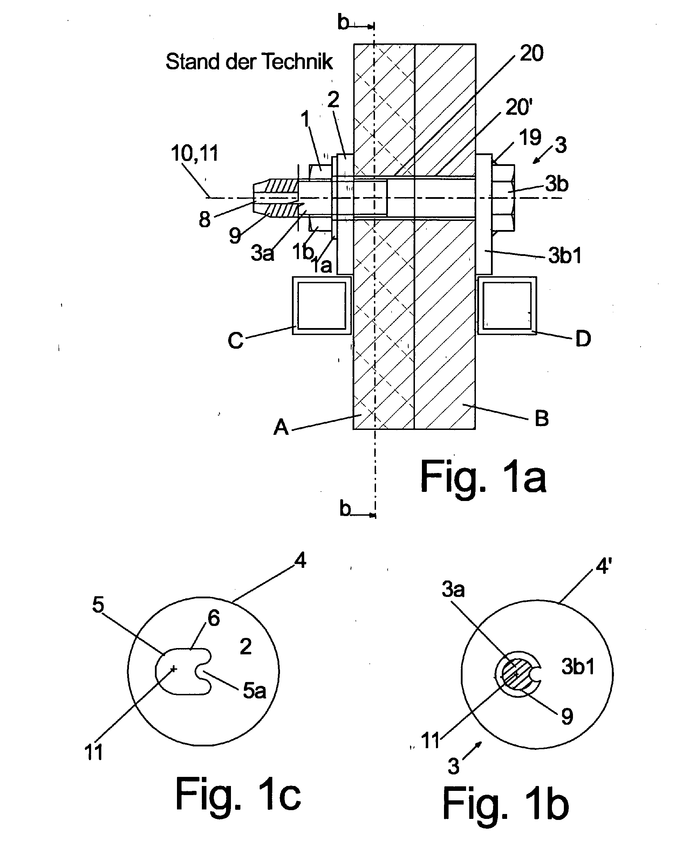

Fig. 1a zeigt die fertiggestellte Verschraubung geschnitten entlang der Schraubachse 11, die gleichzeitig die axiale Richtung 10 der Verschraubung ist.

Fig. 1c zeigt die dabei verwendete Unterlegscheibe 2 in der Aufsicht als Einzelteil, während Fig. 1b die verwendete Schraube 3 vom freien Ende her betrachtet, in Querschnittsdarstellung entlang der Linie b-b zeigt.

Die Schraube 3 erstreckt sich dabei durch die in Fluchtung zueinander gebrachten Bohrungen 20, 20' zwei aneinander liegender und gegeneinander zu verspannender Bauteile A, B hindurch.

Der Schraubenkopf liegt dabei mittels der fest - symbolisiert durch die Schweißnaht 19 - mit ihm verbundenen Kopfscheibe 3b1 an der Außenfläche des Bauteils B an, während von der Gegenseite auf das freie Ende des aus dem Bauteil A vorstehenden Schraubenschaftes 3a zunächst eine Unterlegscheibe 2 aufgeschoben ist, und anschließend eine Mutter 1 mit einem Kopfteil 1b und einem Flanschteil 1a aufgeschraubt ist, welche über die Unterlegscheibe 2 gegen die Außenseite des Teiles A presst.

Die Unterlegscheibe 2 und die Kopfscheibe 3b1 besitzen dabei die gleiche Außenkontur, in diesem Fall eine gleichrunde Außenkontur, die bezüglich der Schraubachse 11 jedoch mittig versetzt und in beiden Fällen gleich exzentrisch angeordnet ist.

Im Zustand der fertiggestellten Verschraubung sollen somit die Außenkonturen 4,4' der beiden Scheiben 2 bzw. 3b1 betrachtet in axialer Richtung 10 fluchtend zueinander liegen. Dies ist sichergestellt, indem sich beide Scheiben in der immer gleichen Drehlage um die Schraubachse 11 relativ zur Schraube 3 befinden:

Für die Kopfscheibe 3b1 ist dies sichergestellt durch drehfeste Verbindung mit dem Rest der Schraube, insbesondere dem Schraubenkopf 3b, beispielsweise durch die dargestellte Schweißnaht 19.

Für die Unterlegscheibe 2 ist dies sichergestellt durch eine Gestaltung der Innenkontur 5 ihrer Durchgangsöffnung 6, die einen in die Durchgangsöffnung 6 so stark hineinragenden Fortsatz 5a aufweist, dass dieser beim Aufstecken der Unterlegscheibe 2 auf den Schaft 3a der Schraube 3 in eine dort im Außenumfang vorhandene Längsnut 8 formschlüssig eingreift.

Durch diese Anordnung kann - zum Beispiel vor dem endgültigen Festziehen der Mutter 1 - durch Ansetzen eines Werkzeuges am Kopf 3b der Schraube 3 diese Schraube geringfügig verdreht und dadurch an dem Außenumfang der Scheiben 2 bzw. 3b1 anliegende weitere Bauteile C, D auf einen definierten und in beiden Fällen gleichen Abstand zur Schraubachse 11 eingestellt werden. Nach endgültigem Festziehen der Mutter 1 kann dieser so eingestellte Abstand zur Schraubachse 11 nicht mehr unterschritten werden.

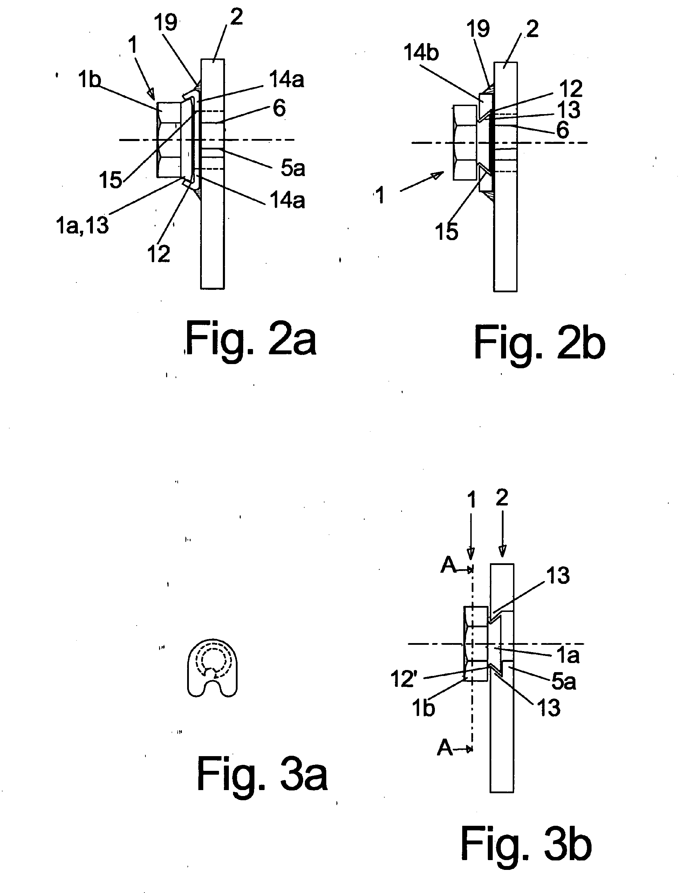

Während in den Figuren 1 die Mutter 1 und Unterlegscheibe 2 noch voneinander getrennte, einzeln zu handhabende Bauteile waren, und die Verschraubung somit aus drei Teilen bestand, zeigen die Figuren 2 bis 4 Lösungen der unverlierbaren, jedoch drehbaren Verbindung von Mutter 1 und exzentrischer Unterlegscheibe 2 miteinander:

Die Fig. 2a und 2b bedienen sich hierzu einer Zwischenscheibe 14a bzw. 14b, die jeweils eine Durchgangsöffnung 15 aufweisen und auf der Unterlegscheibe 2 mit der Durchgangsöffnung 15 fluchtend mit deren Durchgangsöffnung 6 aufgesetzt und drehfest verbunden, beispielsweise mittels der Schweißnaht 19 verschweißt, sind.

In Fig. 2a ist die Zwischenscheibe 14a ein topfförmig gebogenes Blechteil, dessen Ränder nach oben und innen umgebogen sind, so dass eine innen umlaufende Hohlkehle 12 entsteht, in die - vor dem Umbiegen der Ränder nach innen - der nach außen vorstehende Flanschteil 1a der Mutter 1 als Vorsprung 13 umlaufend hineinragt und damit in der so entstandenen umlaufenden Hohlkehle 12 der nach innen gekröpften Ränder der Zwischenscheibe 14a drehbar, jedoch unverlierbar, da in axialer Richtung nicht herausziehbar, gehalten ist.

Da die Durchgangsöffnungen der Mutter 1, der Zwischenscheibe 14 und der Unterlegscheibe 2 so zueinander fluchten, dass beim Aufschrauben der Mutter 1 auf den genuteten Schraubenschaft 3a der Vorsprung 5a der Innenkontur 5 der Unterlegscheibe 2 nach wie vor in die Nut 8 des Schraubenschaftes eingreift, ist die gewünschte Funktionalität nach wie vor erhalten.

Die Anzahl der separat zu handhabenden Einzelteile der Verschraubung ist jedoch auf zwei reduziert und damit die Verschraubung leichter zu automatisieren.

In Fig. 2b ist die Zwischenscheibe 14b eine flachzylindrische Scheibe, jedoch von deutlich größere Dicke als das Material der topfförmigen Scheibe 14a, die aus Blechmaterial besteht.

Die Durchgangsbohrung 15 ist dabei konisch sich erweiternd zu derjenigen Seite hin ausgebildet, mit der die Zwischenscheibe 14b an die Unterlegscheibe 2 angelegt und mit dieser wiederum verschweißt wird.

Dadurch, dass die Seite der größeren Öffnung der konischen Durchgangsöffnung 15 größer ist als die hierzu fluchtende Durchgangsöffnung 6 in der Unterlegscheibe 2, entsteht eine V-förmige Hohlkehle 12, in die wiederum ein entsprechend geformter Vorsprung 13 am Flanschende der Mutter 1 formschlüssig, aber drehbar, aufgenommen ist.

Wie bereits bisher üblich, werden die Mutter 1 und die Zwischenscheibe 14a,b einzeln vorgefertigt und durch ein Umformverfahren der Zwischenscheibe nach dem Einsetzen der Mutter 1 formschlüssig, jedoch drehbar, miteinander verbunden. Anschließend muss das Fixieren der Zwischenscheibe 14a,b an Unterlegscheibe 2, beispielsweise durch Verschweißen, erfolgen.

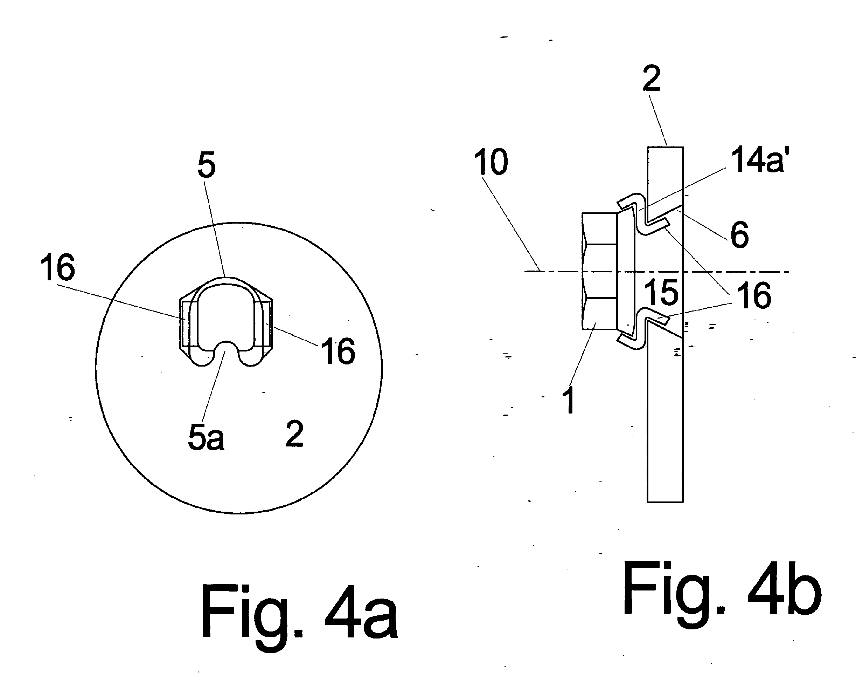

Die Fig. 4b zeigt eine zu Fig. 2a ähnliche Lösung, bei der erfindungsgemäß eine etwa topfförmige Zwischenscheibe 14a' aus einem Blechteil topfförmig gebogen ist, jedoch zusätzlich an zwei einander gegenüberliegenden Stellen des Umfangs zusätzlich eine Ausbiegung 16 von der Durchgangsöffnung 15 aus nach außen und auf die von der Topfseite abgewandte Gegenseite aufweist.

Diese Ausbiegungen 16 können - sofern sie sich parallel zur Längsrichtung 10 erstrecken - durch die Durchgangsöffnung 6 der Unterlegscheibe 2 durchgesteckt werden. Wenn die Durchgangsöffnung 6 der Unterlegscheibe 2 in diesen Umfangsbereichen ebenfalls konisch ausgebildet ist, mit der kleineren Seite zur Mutter 1 und Zwischenscheibe 14a hin, so können anschließend die Ausbiegungen 16 nach außen gebogen werden und halten in ihrer dann gebildeten Außennut die Innenkontur 5 der Unterlegscheibe 2 in axialer Richtung formschlüssig fest, während ein Verdrehen zwischen beiden verhindert ist durch die unrunde Ausbildung der Innenkontur 5, an die die Ausbiegungen 16 angepasst sein müssen.

Dies ist beispielsweise möglich, indem die Innenkontur 5 - abgesehen von dem nach innen weisenden Fortsatz 5a - keine runde Kontur, sondern eine Kontur mit geraden seitlichen Flanken beidseits des Fortsatzes 5a aufweist, und damit in etwa die Form eines Hufeisens.

Auf diese Art und Weise ist ein Verschweißen und alle damit verbundenen Nachteile zwischen Unterlegscheibe 2 und der Zwischenscheibe 14a' vermeidbar, und ergibt trotzdem eine drehfeste Verbindung zwischen diesen beiden Bauteilen, wobei natürlich die Drehbarkeit der Mutter 1 gegenüber der Unterlegscheibe 2 erhalten bleibt.

Fig. 3b zeigt eine Lösung, bei der die Mutter 1 direkt an der Unterlegscheibe 2 drehbar, aber unverlierbar, gehalten ist.

Dabei ist vorzugsweise die Hohlkehle 12' an der Mutter 1 ausgebildet, vorzugsweise durch eine Einschnürung zwischen deren Kopfteil 1 b und Flanschteil 1a.

In diese Hohlkehle 12' greift formschlüssig ein Vorsprung ein, der an der Innenkontur 5 nach innen vorstehend analog ausgebildet ist, vorzugsweise V-förmig wie die Hohlkehle 12', und zwar über wenigstens etwas mehr als 180° des Umfanges.

Im Bereich der Nase 5a der Innenkontur 5 der Unterlegscheibe 2 kann dieser Vorsprung 13 ebenfalls vorhanden sein, und damit gegebenenfalls auch über den gesamten Umfang durchgehen, jedoch erstreckt sich in axialer Richtung der Vorsprung 13 dann nur über einen Teil der Dicke der Unterlegscheibe 2.

Über den Rest der Dicke erstreckt sich der Vorsprung 5a radial nach innen in das Innere der Innenkontur 5 hinein.

Der Vorsprung 13 wird an der Unterlegscheibe 2 nach Einsetzen der Mutter 1 durch ein Umformverfahren in die Hohlkehle 12' hinein verformt.

Fig. 3a zeigt im Schnitt entlang der Linie A-A das für das Aufstecken der Mutter mit Unterlegscheibe notwendige, noch nicht vollständig erfolgte Ausrichten der Nut 8 in der Schraube 3 auf den Fortsatz 5a an der Unterlegscheibe 2.

### BEZUGSZEICHENLISTE

- 1: Mutter
- 2: Unterlegscheibe
- 3: Schraube
- 3a: Schaft
- 3b: Kopf
- 3b1: Kopfscheibe
- 4, 4': Außenkontur
- 5: Innenkontur
- 5a: Fortsatz
- 6: Durchgangsöffnung
- 7: Innengewinde
- 8: Nut
- 9: Außengewinde
- 10: axiale Richtung
- 11: Schraubachse
- 12, 12': Hohlkehle
- 13: Vorsprung
- 14a,b: Zwischenscheibe
- 15: Durchgangsöffnung
- 16: Ausbiegung
- 19: Schweißnaht
- 20, 20': Bohrung

## Patentansprüche

1. Verbindungselement mit
- einer Schraube (3),
- einer darauf aufschraubbaren Mutter (1),
- einer Unterlegscheibe (2),
- wobei die Unterlegscheibe (2) eine runde, exzentrisch zur Schraubachse (11) der Mutter liegende Außenkontur (4) aufweist,
- der Schraubenschaft (3a) einen unrunden, formschlüssig mit der Innenkontur (5) der Unterlegscheibe (2) der Mutter (1) zusammenwirkenden, Querschnitt aufweist,
**dadurch gekennzeichnet, dass**
- die Unterlegscheibe (2) bezüglich der Mutter unverlierbar drehbar angeordnet ist,
- eine Hohlkehle (12) im Innenumfang einer topfförmigen Zwischenscheibe (14'a) ausgebildet ist, deren Boden zentrisch eine Durchgangsöffnung (15) aufweist, und die auf einer Seite der Unterlegscheibe (2) fluchtend mit deren Innenkontur (5) aufgesetzt und drehfest mit dieser verbunden ist und
- die topfförmige Zwischenscheibe (14'a) in ihrem Querschnitt auf zwei Seiten Z-förmig gestaltet ist, und in der inneren Hohlkehle der Außenumfang des Flanschteiles (1a) der Mutter (1) als Vorsprung (13) drehbar angeordnet ist, und in der nach außen weisenden Hohlkehle (12') die nach innen weisenden Kanten der Innenkontur (5) der Unterlegscheibe (2) auf wenigstens zwei einander gegenüberliegenden Seiten hineinragen und mit dieser drehfest verbunden sind.

2. Verbindungselement nach Anspruch 1,
**dadurch gekennzeichnet, dass**
der Kopf (3b) der Schraube (3) eine unrunde und/oder exzentrisch zur Schraubachse (11) der Schraube (3) liegenden Außenkontur (4') aufweist, insbesondere eine Außenkontur (4') gleicher Form und Lage zu derjenigen (4) der Unterlegscheibe (2) der Mutter (1), wenn diese formschlüssig auf dem Schraubenschaft (3a) sitzt.

3. Verbindungselement nach Anspruch 2,
**dadurch gekennzeichnet, dass**
in Umfangsrichtung betrachtet ein Fortsatz (5a) relativ zur exzentrischen Außenkontur (4) der Unterlegscheibe (2) gegenüber der Soll-Relativlage um das zwischen dem Fortsatz (5a) der Unterlegscheibe (2) und eine Nut (8) im SchraubenSchaft (3a) vorhandene Spiel in Drehrichtung versetzt, insbesondere versetzt in Abschraub-Richtung der Mutter, angeordnet ist.

4. Verbindungselement nach einem der vorhergehenden Ansprüche,
**dadurch gekennzeichnet, dass**
- die Außenkontur des Schraubenschaftes (3a) möglichst spielfrei mit der Innenkontur (5) der Unterlegscheibe (2) der Mutter (1) zusammenwirkt, und/oder
- die Innenkontur (5) einen bzw. den in den Freiraum hineinragenden Fortsatz (5a) aufweist, und/oder
- die seitlichen Flanken des Fortsatzes einen Zwischenwinkel von weniger als 50°, insbesondere weniger als 40°, insbesondere weniger als 30°, insbesondere weniger als 20° zueinander besitzen.

5. Verbindungselement nach einem der vorhergehenden Ansprüche 3 oder 4,
**dadurch gekennzeichnet, dass**
- die Flanken des Fortsatzes (5a) gerundet in den Rest der Innenkontur (5) übergehen, und/oder
- der Fortsatz (5a) ein gerundetes freies Ende aufweist, und/oder
- der Fortsatz (5a) V-förmig oder rechteckig gestaltet ist, und/oder
- die Innenkontur (5) zwei Fortsätze (5a, 5a') umfasst.

6. Verbindungselement nach einem der vorhergehenden Ansprüche 3 bis 5,
**dadurch gekennzeichnet, dass**
- die Innenkontur (5) abgesehen von dem wenigstens einen Fortsatz (5a) kreisförmig gestaltet ist, und/oder
- die Innenkontur (5) abgesehen vom nach innen ragenden Fortsatz (5a) hufeisenförmig gestaltet ist mit den freien Enden des Hufeisens beidseits neben dem Fortsatz (5a) , und/oder
- das Spiel zwischen dem Außendurchmesser des Außengewindes (9) auf dem Schaft (3a) der Schraube (3) maximal 0,4 mm, insbesondere maximal 0,3 mm, insbesondere maximal 0,2 mm kleiner ist als der entsprechende Innendurchmesser der Innenkontur (5) der Unterlegscheibe (2).

7. Verbindungselement nach einem der vorhergehenden Ansprüche 3 bis 6,
**dadurch gekennzeichnet, dass**
- der unrunde Querschnitt des Schraubenschaftes (3a) eine bzw. die Nut (8) aufweist entsprechend dem Fortsatz (5a), und die Nut (8) einen vom freien Ende in Richtung Schraubenkopf (3b) abnehmende Größe, insbesondere abnehmende Breite, aufweist.

8. Verbindungselement nach einem der vorhergehenden Ansprüche,
**dadurch gekennzeichnet, dass**
- auf der Außenfläche der Unterlegscheibe (2) und/oder dem Kopf (3b) der Schraube Markierungen, insbesondere nicht entfernbare Markierungen, entlang des Umfanges angeordnet und insbesondere beschriftet sind, und/oder
- der Kopf (3b) eine Kopfscheibe (3b1) umfasst, die drehfest mit dem Kopf (3b) verbunden, insbesondere verschweißt oder einstückig zusammen mit diesem ausgebildet ist und auf dieser die Markierungen angeordnet sind.

## Claims

1. Fastening device having
- a screw (3)
- a nut (1) which can be screwed onto the screw (3)
- a washer (2),
- where the washer (2) has a round outer contour disposed eccentrically relative to the screwing axis (11) of the nut, and
- the screw shank (3a) has an out-of-round cross-section coacting positively with the inner contour (5) of the washer (2) of the nut (1),
**characterised in that**
- the washer (2) is rotatably and captively disposed relative to the nut,
- a recess (12) is formed in the inner circumference of a cup-shaped adapter disk (14'a) at the centre of the base of which there is a through-hole (15) and which is disposed on one side of the washer (2) in line with its inner contour (5) and non-rotatably connected to it, and
- the cup-shaped adapter disk (14'a) is on two sides Z-shaped in cross-section, and the outer circumference of the flange portion (1 a) of the nut (1) is rotatably disposed in the inner recess as a projecting portion (13) and in the outward-facing hollow recess (12') the inward-facing edges of the inner contour (5) of the washer (2) project inwards on at least two opposing sides and are non-rotatably connected to it.

2. Fastening device in accordance with claim 1,
**characterised in that**
the head (3b) of the screw (3) has an out-of-round and/or an outer contour (4') disposed eccentrically relative to the screwing axis (11) of the screw (3), particularly an outer contour (4') identical in form and position to that (4) of the washer (2) of the nut (1), when the nut is positively seated on the screw shank (3a).

3. Fastening device in accordance with claim 2,
**characterised in that,**
viewed along the circumference, a projecting portion (5a) is disposed off-set in the direction of rotation and relative to the eccentric outer contour (4) of the washer (2) relative to the required relative position, and particularly off-set in the unscrewing direction of the nut, by the amount of free motion between the projecting portion (5a) of the washer (2) and a groove (8) in the screw shank (3a).

4. Fastening device in accordance with any one of the foregoing claims,
**characterised in that,**
- the outer contour of the screw shank (3a) coacts with the inner contour (5) of the washer (2) of the nut (1) with as little free motion as possible, and/or
- the inner contour (5) has a projecting portion (5a) projecting into the opening, and/or
- the side flanks of the projecting portion have an angle between them of less than 50° and particularly less than 40°, and particularly less than 30°, and particularly less than 20°.

5. Fastening device in accordance with any one of the foregoing claims 3 or 4,
**characterised in that,**
- the flanks of the projecting portion (5a) curve smoothly round into the rest of the inner contour (5), and/or
- the projecting portion (5a) has a rounded free end, and/or
- the projecting portion (5a) is constructed V-shaped or rectangular, and/or
- the inner contour (5) comprises two projecting portions (5a, 5a').

6. Fastening device in accordance with any one of the foregoing claims 3 to 5,
**characterised in that**
- the inner contour (5) with the exception of the at least one projecting portion (5a) is constructed circular, and/or
- the inner contour, with the exception of the inward-projecting projecting portion (5a) is constructed horse-shoe-shaped with the free ends of the horse-shoe beside the projecting portion (5a) on both sides, and/or
- the free motion between the outer diameter of the outer thread (9) on the shank (3a) of the screw (3) is at a maximum 0.4 mm, and particularly at a maximum 0.3 mm, and particularly at a maximum 0.2 mm less than the corresponding inner diameter of the inner contour (5) of the washer (2).

7. Fastening device in accordance with any one of the foregoing claims 3 to 6,
**characterised in that**
- the out-of-round cross-section of the screw shank (3a) has a groove (8) corresponding to the projecting portion (5a) and the groove (8) diminishes in size, and particularly in width, from the free end towards the screw head (3b).

8. Fastening device in accordance with any one of the foregoing claims,
**characterised in that**
- markings, and particularly indelible markings, and particularly in the form of letters, are disposed along the circumference on the outer face of the washer (2) and/or the head (3b) of the screw, and/or
- the head (3b) incorporates a washer (3b1) which is non-rotatably connected to the head (3b), and particularly welded to or forming a single piece with the head, and on which the markings are disposed.

## Revendications

1. Dispositif de fixation comprenant
- une vis (3),
- un écrou vissable dessus (1),
- une rondelle intercalaire (2),
- la rondelle intercalaire (2) présentant un contour extérieur (4) circulaire excentrique par rapport à l'axe de vissage (11) de l'écrou,
- la tige (3a) de la vis présentant une section non ronde interagissant par adhérence de formes avec le contour intérieur (5) de la rondelle intercalaire (2) de l'écrou (1),
**caractérisé en ce que**
- la rondelle intercalaire (2) est agencée de façon rotative et imperdable par rapport à l'écrou,
- une gorge (12) a été ménagée dans la circonférence intérieure d'une rondelle intermédiaire (14'a) en forme de pot, dont le fond présente au centre un orifice de passage (15) et qui sur un côté de la rondelle intercalaire (2) a été posée dans l'alignement avec son contour intérieur (5) et reliée solidaire en rotation avec cette dernière et
- la rondelle intermédiaire (14'a) en forme de pot présente sur deux côtés une section en Z et **en ce que** dans la gorge intérieure la circonférence extérieure de la partie flasque (1 a) de l'écrou (1) est agencée rotative sous forme de saillie (13) et **en ce que** dans la gorge (12') regardant vers l'extérieur font saillie sur au moins deux côtés se faisant face les arêtes, regardant vers l'intérieur, du contour intérieur (5) de la rondelle intercalaire (2) et sont reliés solidaires en rotation avec cette dernière.

2. Dispositif de fixation selon la revendication 1,
**caractérisé en ce que**
la tête (3b) de la vis (3) présente un contour extérieur (4') non rond et/ou excentrique par rapport à l'axe de vissage (11) de la vis (3), en particulier un contour extérieur (4') présentant la même forme et position que celui (4) de la rondelle
intercalaire (2) de l'écrou (1), lorsque ce dernier se trouve en assise par adhérence de formes sur la tige (3a) de la vis.

3. Dispositif de fixation selon revendication 2,
**caractérisé en ce que**
observé dans le sens circonférentiel, un appendice (5a) relativement au contour extérieur (4) excentrique de la rondelle intercalaire (2) est agencé, par rapport à la position relative de consigne, décalé dans le sens de rotation du quantum de jeu existant entre l'appendice (5a) de la rondelle intercalaire (2) et une rainure (8) dans la tige (3a) de vis, notamment décalé dans le sens de dévissage de l'écrou.

4. Dispositif de fixation selon l'une des revendications précédentes,
**caractérisé en ce que**
- le contour extérieur de la tige de vis (3a) interagit de préférence sans jeu avec le contour intérieur (5) de la rondelle intercalaire (2) de l'écrou (1), et/ou
- le contour intérieur (5) présente un ou l'appendice (5a) faisant saillie dans l'espace libre, et/ou
- les flancs latéraux de l'appendice présentent les un par rapport aux autres un angle intermédiaire inférieur à 50°, notamment inférieur à 40°, notamment inférieur à 30°, notamment inférieur à 20°.

5. Dispositif de fixation selon l'une des revendications précédentes 3 ou 4,
**caractérisé en ce que**
- les flancs de l'appendice (5a) se fondent en arrondi dans le reste du contour intérieur (5) et/ou
- **en ce que** l'appendice (5a) présente une extrémité libre arrondie et/ou
- **en ce que** l'appendice (5a) est en en forme de V ou rectangulaire et/ou
- **en ce que** le contour intérieur (5) comprend deux appendices (5a, 5a').

6. Dispositif de fixation selon l'une des revendications précédentes 3 à 5
**caractérisé en ce que**
- le contour intérieur (5) hormis celui d'au moins un appendice (5a) est configuré de forme circulaire et/ou
- le contour intérieur (5) hormis celui de l'appendice (5a) saillant vers l'intérieur est configuré en forme de fer à cheval, les deux extrémités libres du fer à cheval se trouvant des deux côtés de l'appendice (5a), et/ou
- le jeu entre le diamètre extérieur du filetage extérieur (9) sur la tige (3a) de la vis (3) est inférieur d'au maximum 0,4 mm, notamment d'au maximum 0,3 mm, notamment d'au maximum 0,2 mm au diamètre intérieur correspondant du contour intérieur (5) de la rondelle intercalaire (2).

7. Dispositif de fixation selon l'une des revendications précédentes 3 à 6,
**caractérisé en ce que**
- la section non ronde de la tige (3a) de vis présente une ou la rainure (8) correspondant à l'appendice (5a), et la rainure (8) présente une taille en diminution, notamment une largeur en diminution, de l'extrémité libre en direction de la tête de vis (3b).

8. Dispositif de fixation selon l'une des revendications précédentes,
**caractérisé en ce que**
- sur la surface extérieure de la rondelle intercalaire (2) et/ou sur la tête (3b) de la vis ont été apposés des marquages, notamment des marquages indélébiles, le long de la circonférence et qu'ils comportent des mentions, et/ou
- la tête (3b) comprend une rondelle têtière (3b1) reliée solidaire en rotation avec la tête (3b), notamment soudée ou configurée monobloc avec cette dernière, et **en ce que** des marquages sont agencés sur la rondelle.
